# EUROPEAN PATENT APPLICATION

(11) **EP 4 806 863 A1**
(43) Date of publication of application: **16.09.2026**
(21) Application number: 24827826.9
(22) Date of filing: 06.11.2024
(51) Int. Cl.: C04B 26/28, C04B 28/26, C08L 3/02

(54) **PLANT-BASED BINDING AGENT**

(30) Priority: 09.11.2023 EP 23383147
(71) Applicant: Minerales Technologicos Expandidos, S.L., 25600 Balaguer Lleida (ES)
(72) Inventor: MARIN CAMALLOL, Daniel, 25600 Balaguer Lleida (ES)
(74) Representative: Durán-Corretjer, S.L.P.
(86) International application number: PCT/ES2024/070691
(87) International publication number: WO 2025/099344

(57) **Abstract**

The present invention relates to a binding agent in the form of a mineralized plant-based aqueous biopolymer, comprising: a) between 1 % (w/w) and 90 % (w/w) of a polysaccharide selected from starch and flours; b) between 1 % (w/w) and 25 % (w/w) of an alkali metal hydroxide, alkaline earth metal hydroxide, or tri-, tetra-, or pentavalent cation; c) between 5 % (w/w) and 70 % (w/w) of silicic acid or a salt thereof (silicates); d) between 1 % (w/w) and 40 % (w/w) of a source of silicon or another metal; and between 0.1 % (w/w) and 15 % (w/w) of sodium hexametaphosphate.

## Description

The present invention relates to a binding agent in the form of mineralized plant-based aqueous biopolymer which, after drying at low temperature, produces a resinous solid which shows high adherence and resistance to the elements. Additionally, it features similar characteristics to those naturally present in the structures of plants, suitable for use on surfaces, whether on its own or with other compounds, where these may be cleaned. This binding agent has similar filmogenic characteristics to traditional synthetic polymers, but its production requires only minimal amounts of petroleum derivatives and volatile organic compounds (VOCs), therefore considered to be both environmentally friendly and biodegradable.

Plant-based aqueous emulsions are generally well-known. They are fluid systems located in dispersed distribution as a dispersed phase in the aqueous dispersing medium as polymerization knots, so-called polymer matrices or particles, consisting of several polymerization chains interlinked with each other.

By definition, a binding agent is a chemical substance or mixture of chemical substances which, when applied to a suitable substrate creates a layer either between the substrate and the subsequent substrate, or between the surface and the subsequent substance applied to it. It is also referred to as a binder. The synthetic resin used to bind different layers of a coating, or forming the matrix of a composite or solid binder, is also referred to as a binding agent.

Aqueous emulsions are used in a wide variety of industrial applications as binding agents, such as coatings or other products. However, a common issue with these types of aqueous emulsions resides in their low washability, as it is easily washed off when rinsed. This is particularly noticeable when used in a variety of products, including exterior paints and coatings, which are meant to create a protective layer, exposed to outdoor conditions.

The author of the present invention has developed a binding agent in the form of aqueous biopolymer of natural origin, in particular of vegetable origin, which possesses a binding capacity equal or even greater than that of other synthetic binders known in the state of the art, such as high adhesion to any material, in particular to ceramic elements, glass or plastics, with a high resistance to outdoor exposure in harsh weather conditions (also being suitable for indoor applications and the wear and tear associated with regular use), and is waterrepellent, among other attributes. Additionally, the presence of silanes and/or siloxanes, and in particular, sodium hexametaphosphate and the preparation process during the production of the binding agent, translates in the paint obtained using this agent is washable, both indoors and outdoors. In particular, the preparation or production of the mineralized plant-based binding agent in the form of aqueous biopolymer which is the subject of this invention is environmentally friendly, requiring little or no petroleum-based chemical substances, and no volatile organic solvents are used.

Therefore, the aim of the present invention is to provide a binding agent in the form of mineralized plant-based aqueous biopolymer obtained from a natural polysaccharide selected from starches and flours which has been allowed to react in an alkaline medium with an alkali-metal hydroxide, alkaline-earth hydroxide or trivalent, tetravalent or pentavalent cation hydroxide, in the company of silicic acid and/or salts thereof and a source of silicon or other metal in powder form (usually silanes and/or siloxanes) and sodium hexametaphosphate.

Polysaccharides are polymers of monosaccharides, which are repeatedly linked by glycosidic bonds. These compounds have a very high molecular weight, which is based on the number of monosaccharide residues or units involved in their structure. This number is almost always indeterminate, varying within a certain range.

It is therefore a first objective of the present invention to provide a mineralized plant-based binding agent in the form of aqueous biopolymer which is characterized in that it comprises:
a) between 1 % (w/w) and 90 % (w/w) of a polysaccharide selected from starches and flours;
b) between 1 % (w/w) and 25 % (w/w) of an alkali-metal hydroxide, alkaline-earth hydroxide or trivalent, tetravalent or pentavalent cation hydroxide
c) between 5 % (w/w) and 70 % (w/w) silicic acid or a salt thereof (silicates);
d) between 1 % (w/w) and 40 % (w/w) of a silicon or other metal source; and
e) between 0.1 % (w/w) and 15 % (w/w) of sodium hexamethaphosphate.

In the present invention, flour means any substance in the form of powder derived from cereals, tubers, pulses, legumes and other seeds or solid processed vegetable matter, usually after gone through a grinding process.

For the purposes of the present invention, starch is understood to be any substance of vegetable origin with a granular consistency and composed mainly of amylose and amylopectin. It is largely contained in flours, being their main source of polysaccharides.

Such starch or flour can be obtained from any plant, cereal or root suitable for industrial processing. Preferably, the starch or flour used in the present invention is obtained from wheat, maize, potato, rice, sweet potato, plantain, cassava, manioc, tapioca, canary seed, oats, barley, rye, millet, sorghum, or a combination thereof. More preferably, such starch or flour is obtained from maize, rice or tapioca.

Preferably, the concentration of said polysaccharide ranges from 5 % (w/w) to 80 % (w/w), more preferably from 5 % (w/w) to 60 % (w/w), and even more preferably from 5 % (w/w) to 20 % (w/w).

Preferably, the concentration of said alkali-metal hydroxide, alkaline-earth hydroxide or trivalent, tetravalent or pentavalent cation hydroxide ranges from 2 % (w/w) to 12 % (w/ w), and even more preferably from 2 % (w/w) to 5 % (w/w).

Preferably, the concentration of said silicic acid or a salt thereof (silicates or siliconates) ranges from 20 % (w/w) to 65 % (w/w), even more preferably from 40 % (w/w) to 60 % (w/w). More preferably, the concentration of said silicic acid or a salt thereof (silicates) in relation to the polysaccharide is between 1:1 and 10:1. Even more preferably, the concentration of said silicic acid or a salt thereof (silicates) in relation to the polysaccharide is 5:1. Further, such silicates may appear in the form of siliconates, for example, sodium siliconate of formula Na₂O₃Si.

Preferably, the concentration of said source of silicon or other metal ranges from 1 % (w/w) to 30 % (w/w), even more preferably from 1 % (w/w) to 20 % (w/w).

For the purposes of the present invention, sodium hexametaphosphate is the substance with molecular formula Na₆O₁₈P₆ and CAS number: 10124-56-8. Preferably, the concentration of sodium hexametaphosphate ranges from 1 % (w/w) and 5 % (w/w). The presence of sodium hexametaphosphate in the binding agent of the present invention allows that any lumps and/or sludge that may have formed are broken up, thereby producing a homogenous final product.

Preferably, the metal cation of the metal hydroxide is selected from the group comprising lithium (Li), sodium (Na), potassium (K), rubidium (Rb), caesium (Cs), francium (Fr), beryllium (Be), magnesium (Mg), calcium (Ca), strontium (Sr), barium (Ba), zinc (Zn), copper (Cu), chromium (Cr), mercury (Hg), cobalt (Co), iron (Fe), manganese (Mn), nickel (Ni), aluminium (Al), platinum (Pt), gold (Au), lead (Pb), bismuth (Bi), thallium (TI) and tin (Sn) or combinations thereof. Most preferably, the hydroxide of the alkali metal is sodium hydroxide.

Preferably, the silicon source is silane, siloxane, or a combination thereof. This results in the aqueous biopolymer, when used industrially, being washable for both indoor and outdoor products. An example of a silane/siloxane mixture that can be used in the composition of the present invention is the one marketed under the name SILRES^{®} Powder D (WACKER).

Preferably, the silicic acid or silicate salts used in the present invention are sodium silicate, potassium silicate, magnesium silicate, calcium silicate, aluminium silicate, or a combination thereof. More preferably, the binding agent in the form of aqueous biopolymer of the present invention may further comprise minerals selected from the list comprising mica, quartz, zeolite, talc, kaolin, or a combination thereof. Even more preferably, this product has a pH ranging from 9 to 13.

Preferably, the binding agent of the present invention includes an antifoam agent. More preferably, this antifoam agent may be a food processing antifoam. An example of an antifoam that can be used in the binding agent of the present invention is one marketed under the name SUPPRESSOR 3583 (Hydrite, USA).

Preferably, the binding agent in the form of aqueous biopolymer of the present invention further comprises other additives that confer additional properties to the final product. More preferably, these additives are glycerin, aloe vera or hydrogen peroxide (H₂O₂). Even more preferably, the concentration of these additives is found to be ranging from 1 % (w/w) to 10 % (w/w).

In natural plant tissues, the hardness of polysaccharide chains is mainly due to the presence of lignin. The polymer obtained in the present invention can be considered an alternative to substitute for lignin, since it is replaced by a silicic skeleton. The balance between the polysaccharide and the silicates is so good that compositions of very different characteristics can be obtained, including hard, flexible, durable, elastic materials, with considerable resistance to water, acid and alkali, depending on the proportions used. Based on its end use, the binding agent in the form of aqueous biopolymer of the present invention may further comprise between 1 % (w/w) and 30 % (w/w) additional organic additives. Preferably, said additional organic additives are resins such as pine resin or other vegetable species, vegetable oils (such as soybean oil, sunflower oil or olive oil), natural gums, surfactants such as polyphosphates, polyols, lecithin or combinations thereof. Such organic additive may be a synthetic resin emulsion selected from acrylic resin and its copolymers, vinyl resin and its copolymers, ethylene resin, versatic resin, styrene butadiene resin, or combinations thereof.

When used as paint, the binding agent in the form of aqueous biopolymer of the present invention may comprise at least one pigment. Such pigment may be selected from the group formed by white inorganic pigments with a pH greater than 8 in aqueous suspension-bioemulsion.

Also, considering its intended end use, the binding agent in the form of aqueous biopolymer of the present invention may further comprise filler components, selected from materials used as extender or filler load (with a pH greater than 8) in the paint and coating industry.

An additional benefit of the binding agent in the form of aqueous biopolymer of the present invention resides in that it can be prepared at room temperature, i.e. heating is not required for this polymerisation reaction.

Preferably, the binding agent in the form of aqueous biopolymer of the present invention can be used as an adhesive. More preferably, it can be used as a natural adhesive for paper, cardboard, wood, mineral-based materials or a combination thereof.

Another objective of the present invention is to provide a coating agent comprising a mineralized plant-based binding agent in the form of aqueous biopolymer, as described above. Preferably, said coating agent further comprises at least one inorganic filler material and/or at least one pigment.

Preferably, said coating agent is an agent for producing paints and continuous coatings, insulation, flooring, waterproofing, among others. More preferably, said paints, continuous coatings, insulating materials, flooring or waterproofing products are suitable for both indoor and outdoor use.

Preferably, said coating agent is a clear lacquer.

Finally, the present invention presents the use of the binding agent in the form of aqueous biopolymer, as described above, as a binding agent in any building material. Preferably, the binding agent of the present invention can be used in different types of mortars.

Another objective of the present invention is to provide a method for the preparation of a mineralized plant-based binding agent in the form of aqueous biopolymer, characterised in that it comprises the setps of:
a. mixing the plant fibres (in the form of flour or starch) with water, a source of powdered silicon and the sodium hexametaphosphate until a uniform aqueous solution is obtained,
b. adding hydroxide of an alkaline metal and stirring until homogeneous, then let it sit for a period of time ranging from 5 minutes to 8 hours,
c. adding silicic acid or its salt, then stirring,
d. leave mixture to stand.

Preferably, the mixture from step a) for the method of the present invention includes an antifoam agent. More preferably, this antifoam agent may be a food processing antifoam. An example of an antifoam that may be used in the preparation of the present invention is one marketed under the trade name SUPPRESSOR 3583 (Hydrite, USA).

The percentages of components to be used are the same as those mentioned above.

As mentioned above, in the method of preparation of the binding agent of the present invention, "flour" is understood to refer to any powdered substance derived from grains, tubers, legumes, and other seeds or processed solid plant materials, typically following a grinding process.

Starch is understood to refer to any plant-based substance with a granular consistency primarily composed of amylose and amylopectin. It is largely contained in flours and represents the main source of polysaccharides in them.

This starch or flour can be obtained from any plant, grain, or root that can be used industrially. Preferably, the starch or flour used in the present invention is obtained from wheat, corn, potato, rice, sweet potato, green plantain, cassava, tapioca, canary seed, oats, barley, rye, millet, sorghum, or a mixture thereof. More preferably, this starch or flour is obtained from corn, rice, or tapioca.

Preferably, the concentration of this polysaccharide is between 1 % (w/w) and 90 % (w/w), more preferably between 5 % (w/w) and 80 % (w/w), even more preferably between 5 % (w/w) and 60 % (w/w), and most preferably between 5 % (w/w) and 20 % (w/w).

Preferably, the concentration of the alkali metal hydroxide, alkaline earth metal hydroxide, or tri-, tetra-, or pentavalent cation is between 1 % (w/w) and 25 % (w/w), more preferably between 2 % (w/w) and 12 % (w/w), and even more preferably between 2 % (w/w) and 5 % (w/w).

Preferably, the concentration of silicic acid or a salt thereof (silicates or siliconates) is between 5 % (w/w) and 70 % (w/w), more preferably between 20 % (w/w) and 65 % (w/w), and even more preferably between 40 % (w/w) and 60 % (w/w). More preferably, the concentration of silicic acid or a salt thereof (silicates) in relation to the polysaccharide is between 1:1 and 10:1. Even more preferably, the concentration of silicic acid or a salt thereof (silicates) in relation to the polysaccharide is 5:1. Furthermore, these silicates may be present in the form of siliconates, such as sodium siliconate with the formula Na₂O₃Si.

Preferably, the concentration of the source of silicon or another metal is between 1 % (w/w) and 40 % (w/w), more preferably between 1 % (w/w) and 30 % (w/w), and even more preferably between 1 % (w/w) and 20 % (w/w).

Preferably, the concentration of sodium hexametaphosphate is between 0.1 % (w/w) and 15 % (w/w). Even more preferably, it is between 1 % (w/w) and 5 % (w/w). The presence of sodium hexametaphosphate in the binding agent of the present invention allows for the dispersion of any clumps and mucilage that may form, resulting in a homogeneous final product.Preferably, the metallic cation of the metal hydroxide is selected from the group comprising lithium (Li), sodium (Na), potassium (K), rubidium (Rb), cesium (Cs), francium (Fr), beryllium (Be), magnesium (Mg), calcium (Ca), strontium (Sr), barium (Ba), zinc (Zn), copper (Cu), chromium (Cr), mercury (Hg), cobalt (Co), iron (Fe), manganese (Mn), nickel (Ni), aluminum (Al), platinum (Pt), gold (Au), lead (Pb), bismuth (Bi), thallium (TI), and tin (Sn), or mixtures thereof. More preferably, the hydroxide is from an alkali metal selected from sodium and potassium. Most preferably, the alkali metal hydroxide is sodium hydroxide.

Preferably, the source of silicon is silane, siloxane, or a mixture thereof. This allows the binding agent in the form of a mineralized aqueous biopolymer, if used industrially, to be washable for both indoor and outdoor products. An example of a silane/siloxane mixture that can be used in the composition of the present invention is marketed under the name SILRES^{®} Powder D (WACKER).

Preferably, the salt of silicic acid or silicate used in the present invention includes sodium silicate, potassium silicate, magnesium silicate, calcium silicate, aluminum silicate, or a mixture thereof. More preferably, the binding agent in the form of a mineralized aqueous biopolymer of the present invention may additionally comprise minerals selected from a list including mica, quartz, zeolite, talc, kaolin, or a combination thereof. Even more preferably, this product has a pH between 9 and 13.

Preferably, in step (a) of the procedure of the present invention, an antifoaming agent is also added. More preferably, this antifoaming agent may be a food processing antifoam. An example of an antifoaming agent that can be used in the present invention is marketed under the name SUPPRESSOR 3583 (Hydrite, USA).

Preferably, the method of preparing the binding agent in the form of a mineralized aqueous biopolymer of plant origin also includes the addition of additives. More preferably, the additives used are selected from resins, oils, natural gums, surfactants, polyols, lecithin, glycerin, anti-sediment agents, antiseptics such as aloe vera, or mixtures thereof.

### EXAMPLES

Example 1: Preparation of a binding agent in the form of mineralized plant-based aqueous biopolymer according to the present invention based on corn starch.

30 grams of corn starch were mixed with 6 grams of sodium hexametaphosphate in aqueous solution (200 ml). A pre-prepared mixture containing 14 grams of plant fibres and 10 grams of SILRES^{®} POWDER D (WACKER) was then added and mixed with the previously-obtained aqueous solution. This solution was left to stand for 3 hours at room temperature. Subsequently, 4 grams of caustic soda (NaOH) were added and left to stand until a thick mass was obtained. After 2 hours, 80 grams of sodium silicate were added and mixed fervently, thus obtaining a final product to which 1 gram of aloe vera is added to provide antiseptic properties.

Example 2: Preparation of a binding agent in the form of mineralized plant-based aqueous biopolymer according to the present invention based on rice flour.

Using a similar procedure to that in Example 1, 75 grams of rice flour were mixed with 20 grams of SILRES^{®} POWDER D (WACKER) and then added to an aqueous solution (500 ml) containing 10 grams of sodium hexametaphosphate. After standing for 4 hours at 20 °C, 15 grams of caustic soda (NaOH) were added and left to stand until a thick consistency was obtained. 2.5 hours later, 200 grams of sodium silicate were added to the mixture and, after stirring vigorously for 20 minutes, 4 grams of hydrogen peroxide (H2O2) were added to give it a lighter colour, thus leaving a final product ready for use with white exterior paint.

Example 3: Washability test of white exterior paint prepared from the mineralized plant-based aqueous biopolymer of the present invention.

White paint ready for exterior use was obtained by adding basic lead carbonate to the resulting product in Example 2.

A washability and rubbing test designed to determine the resistance to rubbing, scratching, wear or loss of colour and gloss, was performed by applying 200 double rubs. The results were measured against those obtained from other white paints on the market: natural paints (product A) and synthetic paints (products B and C). The results obtained and shown in table 1 indicate that weight loss (wear) was equal or lower in most cases, thus confirming a good efficiency coming from an essentially natural paint.

**Table 1: Washability and rubbing test to measure the product of the present invention against 3 commercial products, both natural (A) and synthetic (B and C).**

| Wear (µm) | Invention | Product A | Product B | Product C |
|---|---|---|---|---|
| Test 1 | 4 | 8 | 3.5 | 4 |
| Test 2 | 3,5 | 7 | 5 | 3.5 |
| Test 3 | 4 | 9.5 | 4 | 3.5 |

Example 4: Preparation of a binding agent without sodium hexametaphosphate.

30 grams of cornstarch were mixed in an aqueous solution (200 ml) containing an antifoaming agent. Moderate stirring was performed for 15 minutes. 4 grams of NaOH were added to initiate the degradation reaction of the starch fibers, resulting in a considerably sticky paste which did not flow under stirring. It was allowed to rest for 15 minutes. Next, 80 grams of sodium silicate were added applying vigorous stirring, yielding a thin liquid containing difficult-to-disperse mucilage and/or clumps, thus requiring additional stirring time and energy consumption. These clumps prevented the resulting solution from being filtered. Subsequently, potassium siliconate and polyxiloxane were added, along with glycerin as coalescent and aloe vera as antiseptic. Next, it was stirred vigorously for 20-30 minutes until producing a mixture which was then filtered through a 100-micron mesh.

## Claims

1. Binding agent in the form of mineralized plant-based aqueous biopolymer **characterised in that** it comprises:
a) between 1 % (w/w) and 90 % (w/w) of a polysaccharide selected from starch and flours;
b) between 1 % (w/w) an 25 % (w/w) of an alkali-metal hydroxide, alkaline-earth hydroxide or trivalent, tetravalent or pentavalent cation hydroxide;
c) between 5 % (w/w) and 70 % (w/w) of silicic acid or a salt thereof (silicates),
d) between 1 % (w/w) and 40 % (w/w) of a silicon or other metal source, and
e) between 0.1 % (w/w) and 15 % (w/w) of sodium hexametaphosphate.

2. Binding agent, according to claim 1, **characterised in that** said starch or flour is obtained from wheat, maize, potato, rice, sweet potato, plantain, cassava, manioc, tapioca, canary seed, oats, barley, rye, millet, sorghum, or a combination thereof.

3. Binding agent, according to any one of the preceding claims, **characterised in that** the cation of the metal hydroxide is selected from the group formed by lithium (Li), sodium (Na), potassium (K), rubidium (Rb), caesium (Cs), francium (Fr), beryllium (Be), magnesium (Mg), calcium (Ca), strontium (Sr), barium (Ba), zinc (Zn), copper (Cu), chromium (Cr), mercury (Hg), cobalt (Co), iron (Fe), manganese (Mn), nickel (Ni), aluminium (Al), platinum (Pt), gold (Au), lead (Pb), bismuth (Bi), thallium (TI) and tin (Sn) or combinations thereof.

4. Binding agent, according to claim 3, **characterized in that** said metal hydroxide is sodium hydroxide.

5. Binding agent, according to any one of the preceding claims, **characterised in that** said salt of silicic acid is a silicate selected from sodium silicate, potassium silicate, magnesium silicate, calcium silicate, aluminium silicate or a combination thereof.

6. Binding agent, according to claim 5, **characterised in that** said acid salt is supplemented with minerals selected from mica, quartz, zeolite, talc, kaolin, or a combination thereof.

7. Binding agent, according to any one of the preceding claims, **characterised in that** it further comprises between 1 % (w/w) and 30 % (w/w) of organic additives selected from resins, oils, natural gums, surfactants, polyols, lecithin, glycerin, anti-settling agents, antiseptics such as aloe vera, or combinations thereof.

8. Binding agent, according to claim 7, **characterised in that** said organic additive is a synthetic resin emulsion which is selected from acrylic resin and its copolymers, vinyl resin and its copolymers, ethylene, versatic, styrene butadiene, or combinations thereof.

9. Binding agent, according to any one of the preceding claims, **characterised in that** it further comprises a pigment.

10. Binding agent, according to any one of the preceding claims, **characterised in that** it further comprises a filler material.

11. A method for the preparation of a binding agent in the form of aqueous biopolymer, according to any one of claims 1 to 10, **characterised in that** it comprises the following steps:
a. mixing the plant fibres (in the form of flour or starch) with water, a source of powdered silicon and the sodium hexametaphosphate until a uniform aqueous solution is obtained,
b. adding hydroxide of an alkaline metal and stirring until homogeneous, then let it sit for a period of time ranging from 5 minutes to 8 hours,
c. adding silicic acid or its salt, then stirring,
d. leave mixture to stand.

12. Use of binding agent in the form of aqueous emulsion, according to any one of claims 1 to 10, as binding agent in building materials.

## Amended claims

### Amended claims under Art. 19.1 PCT

1. In response to the International Search Report and Written Opinion issued on 26.02.2025 by the European Patent Office as the International Search Authority, the Applicant wishes to file a new set of amended claims, according to Article 19 and Rule 46 of PCT treaty, in the language of publication (Spanish) of the PCT application.
Claim 1 has been amended by deleting the phrase "alkaline-earth hydroxide or trivalent, tetravalent or pentavalent cation hydroxide" in component 1(b), thus limiting it to one of the embodiments; i.e. to alkali-metal hydroxide. In addition, component 1(c) of claim 1 has been limited to silicates, deleting the phrase "silicic acid or a salt thereof". Finally, component 1(d) has been limited to silane, siloxane or a mixture thereof. Basis for this amendment can be found on page 4, lines 27-32 of the PCT application.
On the other hand, claim 3 has been limited to alkali-metal hydroxides. In claim 5 the phrase "said salt or silicic acid is" has been deleted. Claim 11 has been eliminated.
The above amendments were also made in method claim 12.
Claims 12 and 13 have been renumbered.
The applicant believes that these amendments do not extend the subject-matter beyond the PCT application as filed, and are in accordance to Article 19(2) PCT.
